(19) Europäisches Patentamt
European Patent Office
Office européen des brevets

(11) **EP 4 539 293 A1**

(12) **EUROPEAN PATENT APPLICATION**
published in accordance with Art. 153(4) EPC

(43) Date of publication:
**16.04.2025 Bulletin 2025/16**

(21) Application number: **23818784.3**

(22) Date of filing: **17.03.2023**

(51) International Patent Classification (IPC):
***H02J 7/00*** (2006.01)

(52) Cooperative Patent Classification (CPC):
**H02J 7/00;** Y02E 60/10

(86) International application number:
**PCT/CN2023/082327**

(87) International publication number:
**WO 2023/236616 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.06.2022 CN 202210654627**

(71) Applicant: **Contemporary Amperex Technology
Co., Limited
Ningde, Fujian 352100 (CN)**

(72) Inventors:
• **WU, Kai
Ningde, Fujian 352100 (CN)**
• **CHEN, Xinwei
Ningde, Fujian 352100 (CN)**

(74) Representative: **Ran, Handong et al
Maucher Jenkins
Seventh Floor Offices
Artillery House
11-19 Artillery Row
London SW1P 1RT (GB)**

(54) **ADJUSTING SYSTEM, ENERGY STORAGE SYSTEM THEREOF AND ADJUSTING METHOD THEREFOR**

(57) Disclosed in the present application are an adjusting system, an energy storage system thereof and an adjusting method therefor. The adjusting system comprises a first power converter and a control unit, wherein a plurality of battery clusters of a battery system share the first power converter, and the control unit is communicatively connected to the first power converter and each battery cluster, separately; the control unit disconnects parallel connection between a target battery cluster and other battery clusters, controls connection conduction between the target battery cluster and the first power converter, and sends a target current instruction to the first power converter to adjust the target battery cluster, such that the charge state difference between the target battery cluster and other battery clusters is eliminated, and the constant power operation capability of the battery system is improved. Moreover, the plurality of battery clusters share one first power converter, such that the device cost is low, the cost required by heat dissipation is low, the existing battery system does not need to be changed, and the modification cost is low.

Fig. 1

EP 4 539 293 A1

**Description**

**CROSS REFERENCE TO RELATED APPLICATIONS**

The present disclosure claims priority to the Chinese patent application with the filing number 202210654627.3 filed on June 20, 2022 and entitled "REGULATING SYSTEM AND ENERGY STORAGE SYSTEM AND REGULATING METHOD THEREOF", and the disclosure of which is incorporated herein by reference.

**TECHNICAL FIELD**

The present disclosure relates to the technical field of new energy vehicles, and specifically to a regulating system and an energy storage system and a regulating method thereof.

**BACKGROUND ART**

In the traditional energy storage system architecture, multiple battery clusters are directly connected in parallel to the DC side of the power converter. Due to differences in individual cell capacity, battery cluster internal resistance and other factors, there are differences in SOC between different battery clusters, resulting in the entire energy storage system being unable to discharge and charge at full power, which greatly reduces the energy storage effect of the energy storage system.

**SUMMARY**

The technical problem to be solved by the present disclosure is to provide a flexible foldable photovoltaic module and a preparation method therefor, so as to reduce the production cost of the flexible module.

In a first aspect, the present disclosure provides a regulating system, configured to regulate a battery system, wherein the battery system includes a plurality of battery clusters, the regulating system includes a first power converter and a control unit, wherein a first end of the first power converter is configured to be connected in series with each of the battery clusters, a second end of the first power converter is configured to be connected to a power source, and the control unit is connected to the first power converter and each of the battery clusters in communication respectively; and the control unit is configured to disconnect a parallel connection between a target battery cluster and other battery clusters, and control connection between the target battery cluster and the first power converter to conduct.

In the technical solution of the present disclosure, the first power converter is designed to be connected in series with each battery cluster in the battery system, and the control unit is designed to communicate with the first power converter and each battery cluster, then the parallel connection between the target battery cluster and other battery clusters is disconnected, and the connection between the target battery cluster and the first power converter is controlled to conduct, so that the target battery cluster is regulated according to the target current command through the first power converter, so as to make the state of charge of the target battery cluster close to the target state of charge, that is, close to the state of charge of other battery clusters, thereby eliminating the difference in state of charge between the target battery cluster and other battery clusters, so as to improve the constant power operation capability of the battery system; and in this solution, multiple battery clusters share a first power converter, which has low device cost, low cost for heat dissipation, no need to change the existing battery system, and low modification cost.

In some embodiments, the regulating system further includes a plurality of first controllable switches and a plurality of second controllable switches, wherein number of the first controllable switches and number of the second controllable switches are the same as number of the battery clusters, wherein each of the battery clusters is connected in series with one of the first controllable switches and then connected in parallel with other battery clusters, and each of the battery clusters is connected in series with the first power converter through the second controllable switch, wherein the control unit is configured to control the first controllable switch connected to the target battery cluster to disconnect, so as to disconnect parallel connection between the target battery cluster and other battery clusters; and to control the second controllable switch between the target battery cluster and the first power converter, so as to control the connection between the target battery cluster and the first power converter to conduct. In this embodiment, according to a design of a simple controllable switch, the target battery cluster can be switched between being connected in parallel with other battery clusters and being connected in series with the first power converter, such that when regulating the target battery cluster, the regulation of switching control can be realized through simple switch control. On the basis of realizing the function, the circuit design is simplified and the design and device costs are saved.

In some embodiments, the second end of the first power converter is connected in parallel with any of the plurality of battery clusters, so that the battery cluster connected in parallel with the second end of the first power converter is used as the power source. In this embodiment, the parallel battery clusters are uses as a power source, thereby saving the device cost of the power source.

In some embodiments, the battery system further includes a power source, wherein the second end of the first power converter is connected to the power source.

In a second aspect, the present disclosure provides an energy storage system, including a battery system and the regulating system of any one of implementation modes in the first aspect, wherein the battery system includes a plurality of battery clusters and a second power converter, wherein the plurality of battery clusters are connected in parallel and then connected to the second power converter, the first end of the first power converter is connected in series with each of the battery clusters, the second end of the first power converter is configured to be connected to the power source, and the control unit is connected to the first power converter and each of the battery clusters in communication respectively.

In the technical solution of the present disclosure, the first power converter is designed to be connected in series with each battery cluster in the battery system, and the control unit is designed to communicate with the first power converter and each battery cluster, then the parallel connection between the target battery cluster and other battery clusters is disconnected, and the connection between the target battery cluster and the first power converter is controlled to conduct, so that the target battery cluster is regulated according to the target current command through the first power converter, so as to make the state of charge of the target battery cluster close to the target state of charge, that is, close to the state of charge of other battery clusters, thereby eliminating the difference in state of charge between the target battery cluster and other battery clusters, so as to improve the constant power operation capability of the energy storage system; and in this solution, multiple battery clusters share a first power converter, which has low device cost, low cost for heat dissipation, no need to change the existing battery system, and low modification cost.

In a third aspect, the present disclosure provides a regulating method, including: disconnecting parallel connection between a target battery cluster and other battery clusters, and controlling connection between the target battery cluster and a first power converter to conduct; sending a target current command to the first power converter, so as to regulate the target battery cluster according to the target current command through the first power converter.

In the technical solution of the present disclosure, the parallel connection between the target battery cluster and other battery clusters is disconnected in this solution, the connection between the target battery cluster and the first power converter is controlled to conduct, and the target current command is sent to the first power converter, so as to regulate the target battery cluster according to the target current command through the first power converter, making the state of charge of the target battery cluster close to the target state of charge, that is, close to the state of charge of other battery clusters, thereby eliminating the difference in SOC between the target battery cluster and other battery clusters, so as to improve the constant power operation capability of the energy storage system.

In some embodiments, before disconnecting the parallel connection between the target battery cluster and other battery clusters, the method further includes: collecting state of charge of each of the battery clusters; and comparing the state of charge of each of the battery clusters with a target state of charge, and determining the battery cluster whose state of charge has a preset relationship with the target state of charge as the target battery cluster.

In some embodiments, determining the battery cluster whose state of charge has the preset relationship with the target state of charge as the target battery cluster includes determining the battery cluster with the highest absolute value of difference between the state of charge and the target state of charge as the target battery cluster. In this solution, the battery cluster with the largest absolute value of the difference between the state of charge and the target state of charge is taken as the target battery cluster, thereby regulating the battery cluster with the largest SOC difference among the multiple battery clusters, so that the SOC difference in the battery system can be effectively eliminated, and the output power of the battery system can be effectively improved.

In some embodiments, before sending the target current command to the first power converter, the method further includes: calculating difference between the state of charge of the target battery cluster and the target state of charge, to obtain difference of state of charge; obtaining a present current value of the target battery cluster; calculating a target regulated current value according to the difference of state of charge and the present current value; and generating the target current command according to the target regulated current value. In this implementation mode, the target regulated current value is accurately calculated by the difference of state of charge and the present current value of the target battery cluster, and then a target current command is generated based on the target regulated current value, so that the regulation of the first power converter on the target battery cluster can be accurately controlled, making the SOC regulation of the target battery cluster more accurate.

In some embodiments, calculating the present current value of the target battery cluster includes: obtaining a bus voltage, a voltage of the first power converter, a battery voltage of the target battery cluster, and an impedance of the target battery cluster; calculating differences between the bus voltage and the voltage of the first power converter, as well as the battery voltage of the target battery cluster, so as to obtain a present current voltage difference; calculating a quotient of the present current voltage difference and the impedance of the target battery cluster, so as to obtain the present current value of the target battery cluster.

In some embodiments, before sending the target current command to the first power converter, the method further includes: calculating difference between the state of charge of the target battery cluster and the target state of charge, to obtain difference of state of charge; obtaining a present current value of the target battery cluster; acquiring a current working status of the battery system; determining a target regulated current value according to the current working status, the difference of charge state, and the present current value of the target battery cluster; generating the target current command according to the target regulated current value.

In some embodiments, determining the target regulated current value according to the current working status, the difference of charge state, and the present current value of the target battery cluster, includes: determining a target regulating coefficient according to the current working status and the difference of state of charge; calculating a product of the target regulating coefficient and the present current value of the target battery cluster, to obtain the target regulated current value.

In some embodiments, determining the target regulating coefficient according to the current working status and the difference of state of charge includes: determining, when the current working status of the battery system is charging and the difference of state of charge is greater than 0, the target regulating coefficient as a first preset coefficient; determining, when the current working status of the battery system is charging and the difference of state of charge is smaller than 0, the target regulating coefficient as a second preset coefficient; determining, when the current working status of the battery system is discharging and the difference of state of charge is greater than 0, the target regulating coefficient as a third preset coefficient; determining, when the current working status of the battery system is discharging and the difference of state of charge is smaller than 0, the target regulating coefficient as a fourth preset coefficient, wherein the first and fourth preset coefficients are less than 1, and the second and third preset coefficients are greater than 1. In this embodiment, when the battery system is in a discharge state, if the SOC of the target battery cluster is higher than other battery clusters, the target battery cluster will be discharged faster; if the SOC of the target battery cluster is lower than other battery clusters, the target battery cluster will be charged Slower, thereby balancing the SOC areas of multiple battery clusters, allowing the battery system to discharge all power or fully charge as much as possible, thus improving the constant power operation capability of the energy storage system.

In some embodiments, before disconnecting the parallel connection between the target battery cluster and other battery clusters, the method further includes: acquiring a battery voltage of each of the battery clusters before connecting the plurality of battery clusters in parallel; determining the battery cluster whose battery voltage meets a preset parallel condition as a parallel-connectable battery cluster; controlling a plurality of parallel-connectable battery clusters to be connected in parallel. In this embodiment, before the battery system is powered on, based on the battery voltage of each battery cluster, the battery clusters that meet the preset parallel conditions are determined as parallel battery clusters, so that all the parallel-connectable battery clusters are connected in parallel to avoid the circulating current caused by the parallel connection of battery clusters with significant SOC differences when powered on, thereby improving the reliability of the battery system.

In some embodiments, determining the battery cluster whose battery voltage meets the preset parallel condition as the parallel-connectable battery cluster includes: determining all the battery clusters with a difference between the battery voltage and a target battery voltage less than a first preset voltage threshold as the parallel-connectable battery clusters; determining, from the battery clusters, a candidate parallel-connectable battery cluster with a difference between the battery voltage and the target battery voltage greater than the first preset voltage threshold and less than the second preset voltage threshold; and controlling the first power converter to perform voltage compensation on the candidate parallel-connectable battery cluster, so that the candidate parallel-connectable battery cluster becomes the parallel-connectable battery cluster.

In some embodiments, determining, from the battery clusters, the candidate parallel-connectable battery cluster with the difference between the battery voltage and the target battery voltage greater than the first preset voltage threshold and less than the second preset voltage threshold, includes: determining, if there are one battery cluster with the difference between the battery voltage and the target battery voltage greater than the first preset voltage threshold and less than the second preset voltage threshold, the battery cluster with the difference between the battery voltage and the target battery voltage greater than the first preset voltage threshold and less than the second preset voltage threshold as the candidate parallel-connectable battery cluster; and determining, if there are a plurality of battery clusters with the difference between the battery voltage and the target battery voltage greater than the first preset voltage threshold and less than the second preset voltage threshold, the battery cluster with the smallest difference between the battery voltage and the target battery voltage as the candidate parallel-connectable battery cluster among the plurality of battery clusters with the difference between the battery voltage and the target battery voltage greater than the first preset voltage threshold and less than the second preset voltage threshold.

In a fourth aspect, the present disclosure provides a regulating device, applied to a regulating system connected to a battery system, wherein the battery system includes a plurality of battery clusters, and the regulating device includes: a control module, configured to disconnect parallel connection between a target battery cluster and other battery clusters, and control connection between the target battery cluster and a first power converter to conduct; a sending module, configured to send a target current command to the first power converter, so as to regulate the target battery cluster according to the target current command through the first power converter.

For the regulating device designed above, in this solution, by the control module, the parallel connection between the target battery cluster and other battery clusters is disconnected, and the connection between the target battery cluster and the first power converter is controlled to conduct. In addition, the target current command is sent to the first power converter by the sending module, so that the target battery cluster is regulated by the first power converter according to the target current command, making the state of charge of the target battery cluster close to the target charge state, that is, close to the state of charge of other battery clusters, thereby eliminating the difference of the state of charge between the target battery cluster and other battery clusters, so as to improve the constant power operation ability of the energy storage system.

In a fifth aspect, the present disclosure provides electronic equipment, including a memory and a processor, wherein the memory stores a computer program, wherein the processor, when executing the computer program, implements the method in any one of optional implementations in the third and fourth aspects.

In a sixth aspect, the present disclosure provides a computer-readable storage medium, storing a computer program thereon, wherein the computer program, when executed by a processor, implements the method in any one of optional implementations in the third and fourth aspects.

In a seventh aspect, the present disclosure provides a computer program product, wherein the computer program product, when run on a computer, makes the computer implements the method in any one of optional implementations in the third and fourth aspects.

The above description is only an overview of the technical solution of the embodiments of the present disclosure. In order to have a clearer understanding of the technical means of the embodiments of the present disclosure, it can be implemented according to the content of the description. In order to make the above and other purposes, features, and advantages of the embodiments of the present disclosure more obvious and easy to understand, the specific implementation modes of the present disclosure are listed below.

## BRIEF DESCRIPTION OF DRAWINGS

Various other advantages and benefits will become apparent to those of ordinary skill in the art upon reading the following detailed description of the preferred embodiments. The drawings are for the purpose of illustrating preferred embodiments only and are not to be construed as limiting the present disclosure. Also, the same parts are represented by the same reference numerals throughout the drawings. In the drawings:

Fig. 1 is a first structural schematic diagram of the regulating system provided by the present disclosure;
Fig. 2 is a second structural schematic diagram of the regulating system provided by the present application;
Fig. 3 is a third structural schematic diagram of the regulating system provided by the present application;
Fig. 4 is a fourth structural schematic diagram of the regulating system provided by the present application;
Figure 5 is a schematic structural diagram of the energy storage system provided by the present application;
Fig. 6 is a first flow chart of the regulating method provided by the present application;
Fig. 7 is a second flow chart of the regulating method provided by the present application;
Fig. 8 is a third flow chart of the regulating method provided by the present application;
Fig. 9 is a fourth flow chart of the regulating method provided by the present application;
Fig. 10 is a fifth flow chart of the regulating method provided by the present application;
Fig. 11 is a sixth flow chart of the regulating method provided by the present application;
Fig. 12 is a structural schematic diagram of the regulating device provided by the present application;
Fig. 13 is a structural schematic diagram of the electronic equipment provided by the present application.

The reference numbers in the specific implementation modes are as follows:
1-regulating system; 10-first power converter; 20-control unit; 2-battery system; 21-battery cluster; 22-second power converter; K-first controllable switch; B-second controllable switch; C-power source; 3-energy storage system; 1200-control module; 1210-sending module; 1220-collection module; 1230-determination module; 1240-calculation module; 1250-generation module; 1260-acquisition module ; 13-electronic equipment; 1301-processor; 1302-memory; 1303-communication bus.

## DETAILED DESCRIPTION OF EMBODIMENTS

The embodiments of the technical solution of the present application will be described in detail below in conjunction with the accompanying drawings. The following embodiments are only used to illustrate the technical solutions of the present disclosure more clearly, and are therefore only used as examples and cannot be used to limit the protection scope of the present application.

Unless otherwise defined, all technical and scientific terms used herein have the same meaning as commonly understood by those skilled in the technical field belonging to the present application; the terms used herein are only for the purpose of describing specific embodiments, and are not intended to limit the present application; the terms "including" and "having" and any variations thereof in the description, claims, and the above drawing of the present application are intended to cover non-exclusive inclusion.

In the description of the embodiments of the present application, the technical terms "first", "second", etc. are only used to distinguish different objects, and cannot be understood as indicating or implying relative importance or implicitly indicating quantity, specific order, or priority relationship of the indicated technical features. In the description of the embodiments of the present application, "plurality" means two or more, unless otherwise explicitly and specifically limited.

Reference herein to "an embodiment" means that a particular feature, structure, or characteristic described in connection with the embodiment can be included in at least one embodiment of the present application. The appearances of this phrase in various places in the Description are not necessarily all referring to the same embodiment, nor are separate or alternative embodiments mutually exclusive of other embodiments. Those skilled in the art understand, both explicitly and implicitly, that the embodiments described herein may be combined with other embodiments.

In the description of the embodiments of the present application, the term "and/or" is only an association relationship describing associated objects, indicating that there can be three relationships, such as A and/or B, which can mean the following three situations: there is A, there are A and B, and there is B. In addition, the character "/" herein generally indicates that the related objects are in an "or" relationship.

In the description of the embodiments of the present application, the term "multiple" refers to more than two (including two), and similarly, "multiple groups" refers to more than two groups (including two groups), and "multiple pieces" refers to two or more pieces (including two pieces).

In the description of the embodiment of the present application, the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", and "circumferential" that indicate directions or positional relationships are based on the orientation or positional relationship shown in the drawings, only to facilitate the description of the embodiments of the present application and simplify the description, and do not indicate or imply that the devices or elements referred to must have a specific orientation, be constructed and operated in a specific orientation, and therefore they cannot be understood as limitations on the embodiments of the present application.

In the description of the embodiments of the present application, unless otherwise clearly stated and limited, the technical terms "installation", "connection", "junction", "fixation" and other terms should be understood in a broad sense. For example, it can be a fixed connection, a detachable connection, or integration; it can be a mechanical connection or an electrical connection; it can be a direct connection or an indirect connection through an intermediary; it can be an internal communication of two elements or an interaction of two elements. For those of ordinary skill in the art, the specific meanings of the above terms in the embodiments of the present application can be understood according to specific circumstances.

At present, from the perspective of the development of the market situation, the application of batteries is becoming more and more extensive. Batteries are not only used in energy storage power systems such as hydraulic, thermal, wind and solar power stations, but are also widely used in electric vehicles such as electric bicycles, electric motorcycles and electric cars, as well as in many fields such as military equipment and aerospace. As battery application fields continue to expand, its market demand is also expanding.

In the traditional energy storage system architecture, multiple battery clusters are directly connected in parallel to the DC side of the second power converter. Due to differences in individual cell capacity, internal resistance of battery clusters and other factors, as well as the fact that the actual working environment temperature of each battery cluster cannot be completely consistent, there are inevitable differences in the state of charge (SOC) between different battery clusters. For example, in a case that the SOC of a certain battery cluster is the minimum SOC value among n battery clusters, during the discharge process, because the battery cluster with the minimum SOC value has the least power, it will be discharged first and reach the discharge cut-off voltage early, and then exit operation. The second power converter cannot continue to discharge at full power according to the designed time, thereby greatly reducing the constant power operation capability of the energy storage system. The same is true for the charging process.

The inventor noticed that the current solution is to arrange a first power converter in each battery cluster branch, and the SOC between different battery clusters are balanced by the first power converter, so that the SOC of each battery cluster is equal, that is, the available power of different battery clusters is always consistent, solving the problem of parallel mismatch between different battery clusters. However, in this solution, due to a first power converter is connected in series in each branch, the device cost for the design of the energy storage system is increased. Moreover, due to the addition of many first power converters, heat dissipation of the original energy storage system cannot meet the demand, it may also lead to improvements in heat dissipation design and an increase in heat dissipation costs.

Regarding the above problems, the inventor has designed a regulating system and an energy storage system and a regulating method thereof after in-depth research. The regulating system can sequentially regulate different battery clusters by sharing a first power converter among multiple battery clusters under the control of the regulating method, thereby saving costs while solving the problem of SOC differences in different battery clusters.

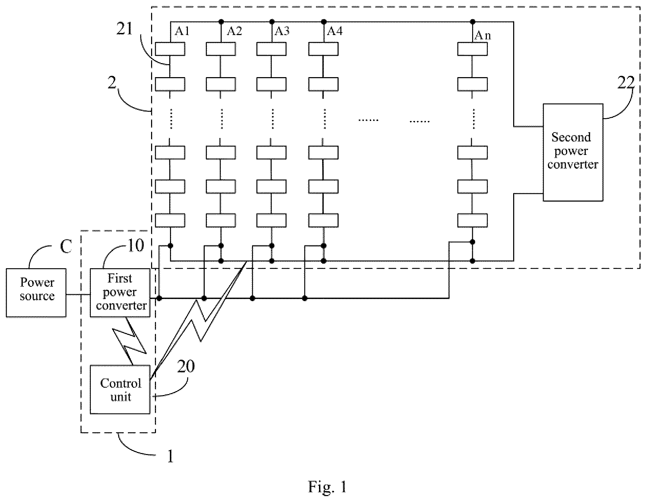

The present application provides an regulating system. As shown in Fig. 1, the regulating system 1 can regulate the battery system 2. Please refer to Fig. 1, the battery system 2 includes a plurality of battery clusters 21. The plurality of battery clusters 21 may specifically include battery clusters A1 to battery clusters An, as shown in Fig. 1. The plurality of battery clusters 21 are connected in parallel and then configured to be connected to the second power converter 22, so to achieve power output. Herein, each of the battery clusters 21 may include a plurality of batteries 211 connected in series. The second power converter 21 may be a DC/AC converter or an inverter, and it has an effect of converting the DC power supply of the plurality of battery clusters 21 connected in parallel into AC power with stable output voltage and frequency.

The regulating system 1 includes a first power converter 10 and a control unit 20. The control unit 20 can be communicatively connected to the first power converter 10.

When the regulating system 1 regulates the battery system 2, the connection mode between the regulating system 1 and the battery system 2 can be shown in Fig.1. A first end of the first power converter 10 is connected in series with each of the battery clusters 21. A second end of the power converter 10 is configured to be connected to a power source C, and the control unit 20 can communicate with each of the battery clusters 21. Herein, the first power converter 10 can be a DC/DC converter, which can also be called as a switching power supply or a switching regulator, and its function is to convert the input voltage and effectively output a fixed voltage; the control unit 20 can be a computing device with processing capability, including but not limited to a chip, a computers, and a server, etc., and it can also be battery management systems (BMS) or an energy storage system management server, etc.

Under normal circumstances, all of the battery clusters 21 in the battery system 2 are connected in parallel and conductive so as to transmit electric energy to the second power converter to achieve electric energy output. During normal operation, the control unit 20 can detect state of charge of each of the battery clusters 21. When the difference in state of charge is large, the regulating system 1 will perform regulation. The specific regulating process is: the control unit 20 first determines a target battery cluster that needs to be regulated among the plurality of battery clusters 21, then disconnects parallel connection between the target battery cluster and other battery clusters, and controls the connection between the target battery cluster and the first power converter 10 to conduct, so that the first power converter 10 regulates the target battery cluster according to the target current command, thereby eliminating difference in SOC between the target battery cluster and other battery clusters, and improving the power output of the battery system. For example, battery cluster A1 to battery cluster An are all connected in parallel to the second power converter 22, and the control unit 20 determines that battery cluster A1 is the target battery cluster, then the control unit disconnects the parallel connections between battery cluster A1 and other battery clusters. Then, the connection between the battery cluster A1 and the first power converter 10 is conductive, thus the first power converter 10 regulates the target battery cluster according to the target current commend, so that the state of charge of the battery cluster A1 is close to the target state of other battery clusters.

Herein, the target battery cluster may be a battery cluster whose state of charge has a preset relationship with the target state of charge. Specifically, it may be the battery cluster with the largest absolute value of the difference between the state of charge and the target state of charge, or it may be any battery cluster among multiple battery clusters with the difference between the state of charge and the target state of charge being greater than a preset value. The target state of charge may be the average state of charge of multiple battery clusters, or the maximum or minimum state of charge among multiple battery clusters.

It should be noted here that after the relationship between the state of charge of the target battery cluster and the target state of charge satisfies the preset relationship, the control unit 20 can disconnect the target battery cluster from the first power converter 10, then connect the target battery cluster in parallel with other parallel battery clusters to connect to the battery system.

In the above-designed regulating system, the first power converter is designed to be connected in series with each battery cluster in the battery system, and the control unit is designed to communicate with the first power converter and each battery cluster, then the parallel connection between the target battery cluster and other battery clusters is disconnected, and the connection between the target battery cluster and the first power converter is controlled to conduct, so that the target battery cluster is regulated according to the target current command through the first power converter, so as to make the state of charge of the target battery cluster close to the target state of charge, that is, close to the state of charge of other battery clusters, thereby eliminating the difference in state of charge between the target battery cluster and other battery clusters, so as to improve the constant power operation capability of the energy storage system; and in this solution, multiple battery clusters share a first power converter, which has low device cost, low cost for heat dissipation, no need to change the existing battery system, and low modification cost.

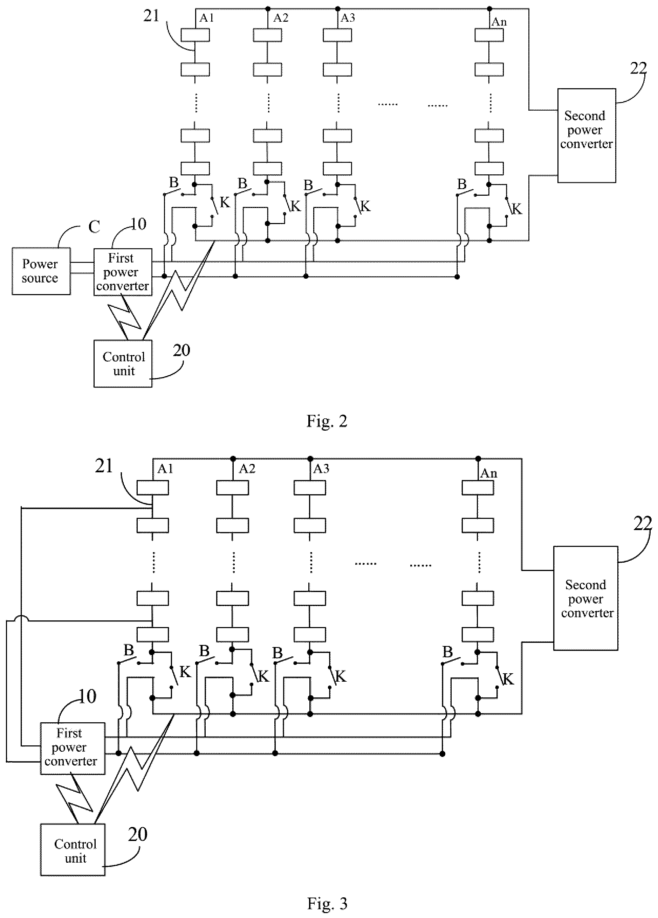

In some examples of this embodiment, as shown in Fig. 2, the regulating system also includes a plurality of first controllable switches K and a plurality of second controllable switches B, wherein the number of the plurality of first controllable switches K is equal to the number of the plurality of second controllable switches B. Each battery cluster 21 is connected in parallel with other battery clusters through a first controllable switch K, and each battery cluster 21 is connected to a second controllable switch B and then to the first power converter 10.

Referring to Fig. 2, for example, the battery cluster A1 is connected to other battery clusters in parallel through the first controllable switch K, and the battery cluster A1 is connected the second controllable switch B and then to the first power converter 10.

Based on the circuit structure shown in Fig. 2, the control unit 20 can control the first controllable switch K connected to the target battery cluster to open, so that the parallel connection between the target battery cluster and other battery clusters is disconnected, and then it controls the second controllable switch B connected to the target battery cluster to close, so that the connection between the target battery cluster and the first power converter 10 is conductive, thereby regulating the target battery cluster through the first power converter 10. After the regulation is completed, the control unit 20 can control the second controllable switch B connected to the target battery cluster to close, thereby disconnecting the target battery cluster from the first power converter 10, and then control the first controllable switch B connected to the target battery cluster to close, so that the target battery cluster is connected in parallel with other battery clusters.

Among them, the first controllable switch K and the second controllable switch B can use the same controllable switch, or different controllable switches. As a specific example, if the same controllable switch is used, both the first controllable switch K and the second controllable switch B can be controlled by a controllable switch such as a thyristor or a silicon controlled rectifier.

In the above implementation mode, according to a design of a simple controllable switch, the target battery cluster can be switched between being connected in parallel with other battery clusters and being connected in series with the first power converter, such that when regulating the target battery cluster, the regulation of switching control can be realized through simple switch control. On the basis of realizing the function, the circuit design is simplified and the design and device costs are saved.

In some examples of this embodiment, the second end of the first power converter 10 may be connected in parallel with any one of the plurality of battery clusters, so that the battery cluster connected in parallel with the second end of the first power converter 10 serves as the power source C. For example, please refer to Fig. 3, the second end of the first power converter 10 is connected in parallel with the battery cluster A1, and then the battery cluster A1 serves as the power source C.

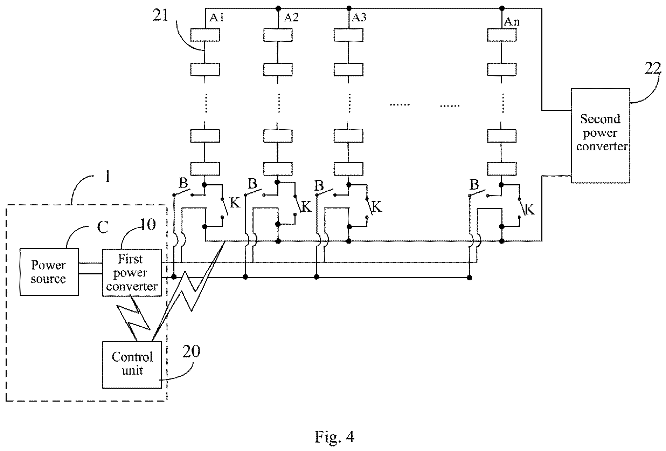

In some examples of this embodiment, as shown in Fig. 4, the regulating system 1 may also include the power source C, and the second end of the first power converter 10 is connected to the power source C, wherein the power source C includes but is not limited to independent batteries, supercapacitors, DC bus, etc.

In some examples of this embodiment, the first power converter 10 may be a non-isolated DC/DC converter or an isolated DC/DC converter; when the first power converter 10 is connected in series with the battery cluster, it can be connected in series with either end of the battery cluster (positive electrode or negative electrode), or it can be connected in series with a certain position in the battery cluster.

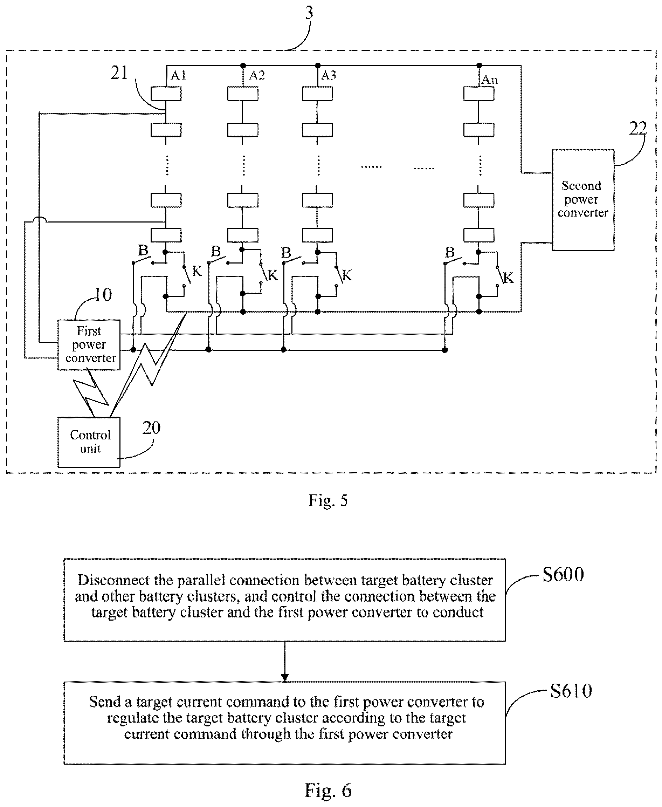

The present disclosure provides an energy storage system. As shown in Fig. 5, the energy storage system 3 includes the regulating system 1 described in any of the aforementioned embodiments and the aforementioned battery system 2. The connection method between the regulating system 1 and the battery system 2 has been described previously and will not be repeated here.

The present application provides a regulating method, which can be applied to the aforementioned regulating system. The regulating method can be executed by the control unit in the aforementioned regulating system. As shown in Fig. 6, the regulating method can be implemented in the following manner.

Step S600: disconnect the parallel connection between the target battery cluster and other battery clusters, and controlling the connection between the target battery cluster and the first power converter to conduct.

Step S610: Send a target current command to the first power converter to regulate the target battery cluster according to the target current command through the first power converter.

In the above embodiment, as described above, in the battery system 2, under normal circumstances, multiple battery clusters are connected in parallel and the second power converter transmits electric energy to achieve electric energy output. On this basis, the control unit can communicate with each battery cluster to obtain the state of charge (SOC) of each battery cluster in the current state, and then the SOC of each battery cluster is compared with the target state of charge (target SOC), so that the battery cluster whose SOC has a preset relationship with the target SOC is determined as the target battery cluster. Herein, it should be noted here that in this solution, only one battery cluster can be determined as the target battery cluster for regulation during a regulating process.

After determining the target battery cluster, in this solution, the parallel connection between the target battery cluster and other battery clusters is disconnected, the connection between the target battery cluster and the first power converter is controlled to conduct, and the target current command is sent to the first power converter, so that the first power converter regulates the target battery cluster according to the target current command, making the SOC of the target battery cluster close to the target SOC, thereby basically eliminating the difference in SOC between the target battery cluster and other battery clusters, so as to improve the constant power operation capability of the energy storage system.

It should be noted here that the target battery command can be generated by a target regulated current, and the target regulated current can regulate the SOC of the target battery cluster. Specifically, the first power converter can regulate its own output according to the target current command, so as to regulate the line current connecting the first power converter to the target battery cluster, thereby regulating the SOC of the target battery cluster.

According to the regulating method of the above design, in this solution, the parallel connection between the target battery cluster and other battery clusters is disconnected, the connection between the target battery cluster and the first power converter is controlled to conduct, and the target current command is sent to the first power converter, so as to regulate the target battery cluster according to the target current command through the first power converter, making the state of charge of the target battery cluster close to the target state of charge, that is, close to the state of charge of other battery clusters, thereby eliminating the difference in SOC between the target battery cluster and other battery clusters, so as to improve the constant power operation capability of the energy storage system.

In some implementation modes of this embodiment, this solution can determine the target battery cluster among multiple battery clusters in the following method.

As a possible implementation mode, in this solution, the state of charge of each battery cluster can be collected, the state of charge of each battery cluster is compared with the target state of charge, and the battery cluster with the largest absolute value of the difference between the state of charge and the target state of charge is finally determined to be the target battery cluster.

In the implementation mode of the above design, the battery cluster with the largest absolute value of the difference between the state of charge and the target state of charge is taken as the target battery cluster in this solution,, thereby regulating the battery cluster with the largest SOC difference among the multiple battery clusters, so that the SOC difference in the battery system can be effectively eliminated, and the output power of the battery system can be effectively improved.

As another possible implementation mode, in this solution, the state of charge of each battery cluster can be collected, the state of charge of each battery cluster is compared with the target state of charge, and the battery clusters with difference between the state of charge and the target state of charge greater than a preset value are gathered together, then a battery cluster is randomly selected from the set as the target battery cluster. The aforementioned target state of charge may be the average state of charge of all battery clusters, or may be the SOC value of the battery cluster with the smallest SOC or the largest SOC among all battery clusters.

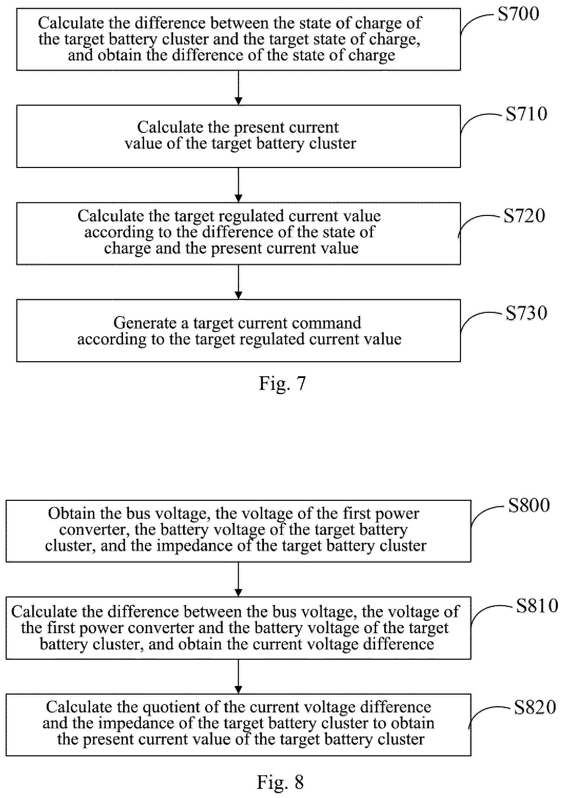

In some implementation modes of this embodiment, it is previously described that the control unit can send a target current command to the first power converter. In this regard, as a possible implementation mode, as shown in Fig. 7, tin his solution, the target current command can be determined and generated in the following method.

Step S700: Calculate the difference between the state of charge of the target battery cluster and the target state of charge, and obtain the difference of the state of charge.

Calculate the present current value of the target battery cluster.

Step S720: Calculate the target regulated current value according to the difference of the state of charge and the present current value.

Step S730: Generate a target current command according to the target regulated current value.

In the above implementation mode, the control unit may calculate the difference between the SOC of the target battery cluster and the target SOC to obtain $\Delta SOC$. Herein, as described above, the target SOC can be the average SOC of all battery clusters, or the maximum or minimum SOC value of all battery clusters.

Furthermore, the control unit may calculate the present current value of the target battery cluster, wherein the present current value represents a line current value after the target battery cluster is connected in series with the first power converter. Herein, the control unit of this solution can perform the calculation operations of step S700 and step S710 at the same time, or can perform them in sequence, which is not limited by this solution.

As a possible implementation mode, the present current value of the target battery cluster can be calculated in the following method, as shown in Fig. 8, including:

Step S800: Obtain the bus voltage, the voltage of the first power converter, the battery voltage of the target battery cluster, and the impedance of the target battery cluster.

Step S810: Calculate the difference between the bus voltage, the voltage of the first power converter and the battery voltage of the target battery cluster, and obtain the current voltage difference.

Step S820: Calculate the quotient of the current voltage difference and the impedance of the target battery cluster to obtain the present current value of the target battery cluster.

In the above implementation mode, the voltage of the first power converter is the voltage after the first power converter is connected in series with the target battery cluster. The battery voltage of the target battery cluster is the voltage after the target battery cluster is connected in series with the first power converter. Herein, the bus voltage, the voltage of the first power converter, and the battery voltage of the target battery cluster can be collected and obtained in real time through the control unit, and the impedance of the target battery cluster can be obtained through query. Specifically, in this solution, the total impedance of each battery cluster connected in series with the first power converter can be calculated in advance, and then the total impedance of each battery cluster and the corresponding battery cluster identification are stored in the control unit, thus the total impedance corresponding to the target battery cluster can be queried through the target battery cluster identification.

For the above implementation mode, in this solution, the above calculation process can be expressed through the following formula:

$$I_{\text{target}} = (U_{\text{bus}} - U_{DC} - U_{bat})/R_{\text{total}};$$

Herein, $U_{\text{bus}}$ represents the bus voltage; $U_{DC}$ is the voltage of the first power converter; $U_{bat}$ is the battery voltage of the target battery cluster; $R_{\text{total}}$ is the impedance of the target battery cluster.

After calculating the present current value of the target battery cluster through the above method, in this solution, the target regulated current value can be calculated based on the difference of the state of charge and the present current value. As a specific implementation mode, in this solution, the regulatable current value f($\Delta$SOC) of the first power converter can be calculated based on the output power and regulating capability of the first power converter combined with the difference of the state of charge. Specifically, The regulatable current value f($\Delta$SOC) can be calculated as following method.

$$\mathrm{f}(\Delta SOC) = K * [(1 + \Delta SOC)^n - 1], \quad \Delta SOC > 0;$$

$$\mathrm{f}(\Delta SOC) = -K * [(1 + \Delta SOC)^n - 1], \quad \Delta SOC < 0;$$

Herein, K is a linear coefficient, n is a power index, and the values of K and n can be adaptively changed according to the specific parameters of the first power converter. For example, the stronger the output power and regulating capability of the first power converter, the larger K and n will be.

After the regulatable current value f($\Delta$SOC) is calculated through the above method, in this solution, the target regulated current value can be calculated based on the present current value and the regulatable current value. Specifically, the target regulated current value $I_2$ can be calculated in the following method.

$$I_2 = I_{\text{target}} + \mathrm{f}(\Delta SOC);$$

After the target regulated current value $I_2$ is calculated, a corresponding target current command can be generated according to the target regulated current value $I_2$ and sent to the first power converter, so that the first power converter regulates its own voltage according to the target regulated current value $I_2$, thereby achieving the effect of regulating the current of the line where the target battery cluster is located.

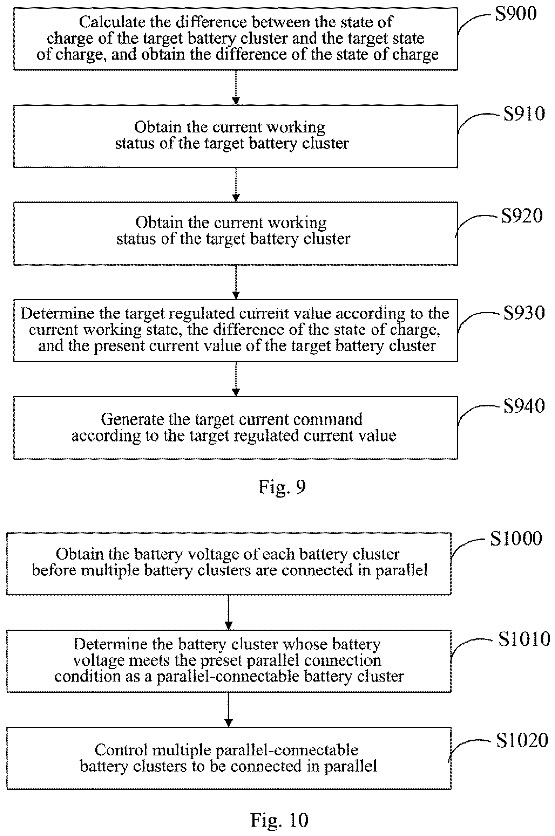

As another possible implementation mode, in addition to the aforementioned method of calculating the target regulated current value, this solution also provides another method of calculating the target regulated current value, as shown in Fig. 9, including:

Step S900: Calculate the difference between the state of charge of the target battery cluster and the target state of charge, and obtain the difference of the state of charge.
Step S910: Calculate the present current value of the target battery cluster.
Step S920: Obtain the current working status of the battery system.
Step S930: Determine the target regulated current value according to the current working status, the difference of the state of charge, and the present current value of the target battery cluster.
Step S940: Generate the target current command according to the target regulated current value.

In the above implementation mode, steps S900 and S910 are implemented in the same method as the aforementioned steps S800 and S810, which will not be described in detail here. In this embodiment, after the difference of the state of charge $\Delta$SOC and the present current value $I_{\text{target}}$ of the target battery cluster are calculated, the current working status of the battery system can be obtained in this solution. Herein, the current working status of the battery system may include charging or discharging. Charging means that all battery clusters in the battery system are in a charging state, and discharging means that all battery clusters in the battery system are in a discharging state.

On the basis of the above, in this solution, the target regulating coefficient x can be first determined based on the current working status and the difference of the state of charge, and then the determined target regulating coefficient x is multiplied by the target current value $I_{\text{target}}$ to obtain the target regulated current value $I_2$. That is, $I_2 = x\, I_{\text{target}}$.

Specifically, in this solution, the target regulating coefficient x can be determined in the following method.

When the current working status of the battery system is charging and the difference of the state of charge is greater than 0, the target regulating coefficient x is determined to be the first preset coefficient $x_1$.

When the current working status of the battery system is charging and the difference of the state of charge is less than 0, the target regulating coefficient x is determined to be the second preset coefficient $c_2$.

When the current working status of the battery system is discharging and the difference of the state of charge is greater than 0, the target regulating coefficient x is determined to be the third preset coefficient $x_3$.

When the current working status of the battery system is discharging and the difference of the state of charge is less than 0, the target regulating coefficient x is determined to be the fourth preset coefficient $x_4$.

Herein, the first preset coefficient $x_1$ and the fourth preset coefficient $x_4$ are less than 1, and the second preset coefficient $x_2$ and the third preset coefficient $x_3$ are greater than 1; the first preset coefficient $x_1$ and the fourth preset coefficient $x_4$ can be the same, for example, both are 0.95, or they can be different, for example, $x_1$ is 0.95, and $x_4$ is 0.9. The second preset coefficient $x_2$ and the third preset coefficient $x_3$ can be the same, for example, both are 1.05, or they can also be different, for example, $x_2$ is 1.05, and $x_4$ is 1.1. It should be noted here that the value of the target regulating coefficient is just an example for ease of understanding. The value of the target regulating coefficient designed in this solution can be adaptively increased or decreased according to the actual scenario.

The principle of the above implementation mode is that when the battery system is in a charging state, if the SOC of the target battery cluster is higher than other battery clusters, the charging of the target battery cluster will be slower; if the SOC of the target battery cluster is lower than other battery clusters, then the target battery cluster will be charged faster.

When the battery system is in a discharge state, if the SOC of the target battery cluster is higher than other battery clusters, the target battery cluster will be discharged faster; if the SOC of the target battery cluster is lower than other battery clusters, the target battery cluster will be charged Slower, thereby balancing the SOC areas of multiple battery clusters, allowing the battery system to discharge all power or fully charge as much as possible, thus improving the constant power operation capability of the energy storage system.

In some examples of this embodiment, the previously described scenarios are all scenarios in which the battery clusters in the battery system are running in parallel. In this solution, the battery clusters are also detected and compensated before the battery clusters in the battery system are powered on, so as to avoids circulating current in the battery system, as shown in Fig. 10, including:

Step S1000: Obtain the battery voltage of each battery cluster before multiple battery clusters are connected in parallel.
Step S1010: Determine the battery cluster whose battery voltage meets the preset parallel connection condition as a parallel-connectable battery cluster.
Step S1020: Control multiple parallel-connectable battery clusters to be connected in parallel.

In the above embodiment, before the battery system is powered on, each battery cluster may have a certain battery voltage. For example, during the last power outage, the batteries in the battery cluster store a certain amount of electric energy but have not exhausted it. On this basis, the control unit can obtain the battery voltage of each battery cluster, and determines the battery cluster whose battery voltage meets the preset parallel connection conditions as a parallel-connectable battery cluster based on the battery voltage of each battery cluster, and then controls multiple parallel-connectable battery clusters to be connected in parallel.

In the above implementation mode, before the battery system is powered on in this solution, based on the battery voltage of each battery cluster, the battery clusters that meet the preset parallel conditions are determined as parallel battery clusters, so that all the parallel-connectable battery clusters are connected in parallel to avoid the circulating current caused by the parallel connection of battery clusters with significant SOC differences when powered on, thereby improving the reliability of the battery system.

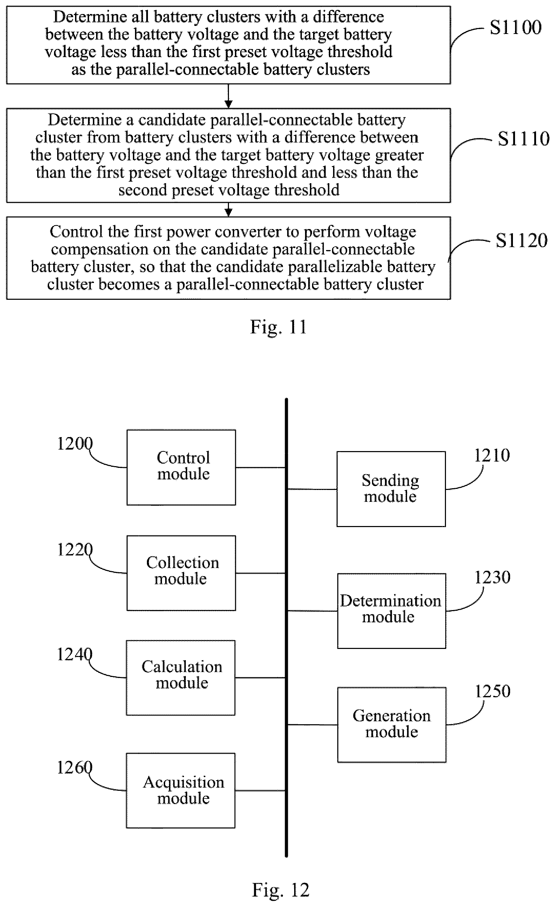

In some implementation modes of this embodiment, as shown in Fig. 11, the parallel-connectable battery cluster may be determined by the following method.

Step S1100: Determine all battery clusters with a difference between the battery voltage and the target battery voltage less than the first preset voltage threshold as the parallel-connectable battery clusters.

Step S1110: Determine a candidate parallel-connectable battery cluster from battery clusters with a difference between the battery voltage and the target battery voltage greater than the first preset voltage threshold and less than the second preset voltage threshold.

Step S1120: Control the first power converter to perform voltage compensation on the candidate parallel-connectable battery cluster, so that the candidate parallelizable battery cluster becomes a parallel-connectable battery cluster.

In the above implementation mode, a first preset voltage threshold UA and a second preset voltage threshold UB can be configured in advance in this solution, where the second voltage threshold UB is greater than the first voltage threshold UA, and the second voltage threshold UB can be determined based on the voltage regulation ability of the first power converter.

In this solution, the voltage difference between each battery cluster and the target battery voltage can be calculated after obtaining the battery voltage of each battery cluster, and then the voltage difference can be compared with the first preset voltage threshold UA and the second preset voltage threshold UB.

If the voltage difference between the battery voltage of the battery cluster and the target battery voltage is less than the first preset voltage threshold UA, the battery cluster is determined as a parallel-connectable battery cluster;

If the voltage difference between the battery voltage of the battery cluster and the target battery voltage is greater than the first preset voltage threshold UA, it is determined whether the voltage difference between the battery voltage of the battery cluster and the target battery voltage is less than the second preset voltage threshold UB. If it is less than the second preset voltage threshold UB, as the first power converter can only compensate for one battery cluster, the battery voltage of the battery cluster can approach the target battery voltage and thus participate in parallel connection. On this basis, if there is only one battery cluster in this solution where the voltage difference between the battery voltage and the target battery voltage is greater than the first preset voltage threshold UA and less than the second preset voltage threshold UB, then the battery cluster is determined as the candidate parallel-connectable battery cluster, and thus the first power converter is controlled to compensate for the voltage of the candidate parallel-connectable battery cluster, so as to make it the parallel-connectable battery cluster.

If there are multiple battery clusters with a voltage difference between the battery voltage and the target battery voltage greater than the first preset voltage threshold UA and less than the second preset voltage threshold UB, then the battery cluster with the largest voltage difference between the battery voltage and the target battery voltage is determined as the candidate parallel-connectable battery cluster. Certainly, in addition to selecting the battery cluster with the largest voltage difference between the battery voltage and the target battery voltage as the candidate battery cluster, in this solution, one battery cluster can be further randomly selected from multiple battery clusters whose voltage difference between the battery voltage and the target battery voltage is greater than the first preset voltage threshold UA and less than the second preset voltage threshold UB as the candidate parallel-connectable battery cluster.

If the voltage difference between the battery voltage of the battery cluster and the target battery voltage is greater than the second preset voltage threshold UB, it indicates that the difference between the battery voltage of the battery cluster and the target battery voltage is too large, and the first power converter cannot regulate it. Therefore, the battery cluster will be listed as non-parallel.

Fig. 12 shows a structural schematic block diagram of a regulating device provided in the present disclosure. It should be understood that the device corresponds to the method embodiments performed in Figs. 6 to 11 and can perform the steps involved in the aforementioned method. The specific functions of the device can be found in the above description. To avoid repetition, detailed descriptions are appropriately omitted here. The device includes at least one software functional module that can be stored in memory in the form of software or firmware or solidified in the operating system (OS) of the device. Specifically, the device includes: a control module 1200, configured to disconnect the parallel connection between the target battery cluster and other battery clusters, and controlling the connection between the target battery cluster and the first power converter to conduct; a sending module 1210, configured to send a target current command to the first power converter to regulate the target battery cluster based on the target current command through the first power converter.

For the regulating device designed above, in this solution, by the control module, the parallel connection between the target battery cluster and other battery clusters is disconnected, and the connection between the target battery cluster and the first power converter is controlled to conduct. In addition, the target current command is sent to the first power converter by the sending module, so that the target battery cluster is regulated by the first power converter according to the target current command, making the state of charge of the target battery cluster close to the target charge state, that is, close to the state of charge of other battery clusters, thereby eliminating the difference of the state of charge between the target battery cluster and other battery clusters, so as to improve the constant power operation ability of the energy storage system.

In some implementation modes of this embodiment, the device further includes: a collection module 1220, configured to collect the state of charge of each battery cluster; a determination module 1230, configured to compare the state of charge of each battery cluster with the target state of charge, and determine the battery cluster whose state of charge has a preset relationship with the target state of charge as the target battery cluster.

In some implementation modes of this embodiment, the determination module 1230 is specifically configured to determine the battery cluster with the largest absolute value of the difference between the state of charge and the target state of charge as the target battery cluster.

In some implementation modes of this embodiment, the device further includes: a calculation module 1240, configured to calculate the difference between the state of charge of the target battery cluster and the target state of charge, and obtain the difference in state of charge; calculate the present current value of the target battery cluster; and calculate the target regulated current value according to the difference of the state of charge and the present current value;

a generation module 1250, configured to generate a target current command according to the target regulated current value.

In some implementation modes of this embodiment, the calculation module 1240 is specifically configured to obtain bus voltage, voltage of the first power converter, battery voltage of the target battery cluster, and impedance of the target battery cluster; calculate the difference between the bus voltage and the voltage of the first power converter as well as the battery voltage of the target battery cluster, and obtain the current voltage difference; and calculate the quotient of the current voltage difference and the impedance of the target battery cluster, and obtain a present current value of the target battery cluster.

In some implementation modes of this embodiment, the calculation module 1240 is further configured to calculate the difference between the state of charge of the target battery cluster and the target state of charge, and obtain the difference of the state of charge; calculate the present current value of the target battery cluster; the device further includes an acquisition module 1260, configured to obtain a current working status of the battery system; the determination module 1230 is further configured to determine the target regulated current value according to the current working status, the difference of the state of charge, and the present current value of the target battery cluster; the generation module 1240 is further configured to generate the target current commend according to the target regulated current value.

In some implementation modes of this embodiment, the determination module 1230 is specifically configured to determine the target regulating coefficient according to the current working status and the difference of the state of charge; and calculate the product of the target regulating coefficient and the present current value of the target battery cluster, and obtain the target regulated current value.

In some implementation modes of this embodiment, the determination module 1230 is further specifically configured to: determine the target regulating coefficient as the first preset coefficient when the current working status of the battery system is charging and the difference of the state of charge is greater than 0; determine the target regulating coefficient as the second preset coefficient when the current working status of the battery system is charging and the difference of the state of charge is less than 0; determine the target regulating coefficient as the third preset coefficient, when the current working status of the battery system is discharge and the difference of the state of charge is greater than 0; determine the target regulating coefficient as the fourth preset coefficient, when the current working status of the battery system is discharge and the difference of the state of charge is less than 0; herein, the first and fourth preset coefficients are less than 1, and the second and third preset coefficients are greater than 1.

In some implementation modes of this embodiment, the acquisition module 1260 is further configured to acquire the battery voltage of each battery cluster before multiple battery clusters are connected in parallel; the determination module 1230 is further configured to determine each battery cluster whose battery voltage has a preset relationship with the target battery voltage as a parallel-connectable battery cluster; and the control module 1200 is further configured to control multiple parallel-connectable battery clusters to connect in parallel.

In some implementation modes of this embodiment, the determination module 1230 is further specifically configured to: determine all the battery clusters with a difference between the battery voltage and the target battery voltage less than the first preset voltage threshold as the parallel-connectable battery clusters; determine, from the battery clusters, a candidate parallel-connectable battery cluster with a difference between the battery voltage and the target battery voltage greater than the first preset voltage threshold and less than the second preset voltage threshold; and control the first power converter to perform voltage compensation on the candidate parallel-connectable battery cluster, so that the candidate parallel-connectable battery cluster becomes a parallel-connectable battery cluster.

In some implementation modes of this embodiment, the determination module 1230 is further specifically configured to: determine, if there are one battery cluster with a difference between the battery voltage and the target battery voltage greater than the first preset voltage threshold and less than the second preset voltage threshold, the battery cluster with a difference between the battery voltage and the target battery voltage greater than the first preset voltage threshold and less than the second preset voltage threshold as the candidate parallel-connectable battery cluster; determine, if there are a plurality of battery clusters with a difference between the battery voltage and the target battery voltage greater than the first preset voltage threshold and less than the second preset voltage threshold, the battery cluster with the smallest difference between the battery voltage and the target battery voltage as the candidate parallel-connectable battery cluster among the plurality of battery clusters with a difference between the battery voltage and the target battery voltage greater than the first preset voltage threshold and less than the second preset voltage threshold.

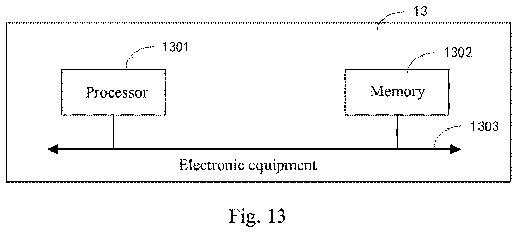

According to some embodiments of the present disclosure, as shown in Fig. 13, the present disclosure provides an electronic equipment 13, including: a processor 1301 and a memory 1302. The processor 1301 and the memory 1302 are interconnected and communicate with each other through a communication bus 1303 and/or other forms of connection mechanism (not shown), and the memory 1302 stores a computer program executable by the processor 1301. When the computing device runs, the processor 1301 executes the computer program to perform any optional implementation mode on the external end machine during execution, such as steps S600 to S610: disconnect the parallel connection between the target battery cluster and other battery clusters, and control the connection between the target battery cluster and the first power converter to conduct; and send a target current command to the first power converter to regulate the target battery cluster according to the target current command.

The present disclosure provides a computer-readable storage medium on which a computer program is stored, and the computer program, when executed by a processor, performs the method in any of the aforementioned optional implementation modes.

Herein, the storage medium can be implemented by any type of volatile or non-volatile storage device or their combination, such as Static Random Access Memory (SRAM), Electrically Erasable Programmable Read-Only Memory (EEPROM), Erasable Programmable Read Only Memory (EPROM), Programmable Read-Only Memory (PROM), Read-Only Memory (ROM), magnetic memory, flash memory, magnetic disk or optical disc.

The present disclosure provides a computer program product that, when running on a computer, causes the computer to execute any method in any optional implementation modes.

Finally, it should be noted that the above embodiments are only used to illustrate the technical solutions of the present disclosure and not to limit it. Although detailed descriptions have been provided for the present disclosure with reference to the aforementioned embodiments, those skilled in the art should understand that they can still modify the technical solutions recited in the aforementioned embodiments, or equivalently replace some or all of the technical features. These modifications or replacements do not make the essence of the corresponding technical solutions separate from the scope of the technical solutions in each embodiment of the present disclosure, and they should all be covered within the scope of the claims and the description of the present disclosure. Especially, as long as there is no structural conflict, the various technical features mentioned in each embodiment can be combined in any way. The present disclosure is not limited to specific embodiments disclosed herein, but includes all technical solutions falling within the scope of the claims.

**Claims**

1. A regulating system, configured to regulate a battery system, wherein the battery system comprises a plurality of battery clusters, wherein

   the regulating system comprises a first power converter and a control unit, wherein a first end of the first power converter is configured to be connected in series with each of the battery clusters, a second end of the first power converter is configured to be connected to a power source, and the control unit is in communication with the first power converter and each of the battery clusters respectively; and
   the control unit is configured to disconnect a parallel connection between a target battery cluster and other battery clusters, and control connection between the target battery cluster and the first power converter to enable conduction.

2. The regulating system according to claim 1, further comprising a plurality of first controllable switches and a plurality of second controllable switches, wherein the number of the first controllable switches and the number of the second controllable switches are the same as the number of the battery clusters,

   wherein each of the battery clusters is connected in series with one of the first controllable switches and then connected in parallel with other battery clusters, and each of the battery clusters is connected in series with the first power converter through a second controllable switch,
   wherein the control unit is configured to control the first controllable switch connected to the target battery cluster to disconnect, so as to disconnect parallel connection between the target battery cluster and other battery clusters; and to control the second controllable switch between the target battery cluster and the first power converter, so as to control the connection between the target battery cluster and the first power converter to enable conduction.

3. The regulating system according to claim 1 or 2, wherein the second end of the first power converter is connected in parallel with any of the plurality of battery clusters, so that the battery cluster connected in parallel with the second end of the first power converter is used as the power source.

4. The regulating system according to claim 1 or 2, further comprising a power source, wherein the second end of the first power converter is connected to the power source.

5. An energy storage system, comprising a battery system and the regulating system as claimed in any one of claims 1-4, wherein the battery system comprises a plurality of battery clusters and a second power converter, wherein the plurality of battery clusters are connected in parallel and then connected to the second power converter, the first end of the first power converter is connected in series with each of the battery clusters, the second end of the first power converter is configured to be connected to the power source, and the control unit is in communication with the first power converter and each of the battery clusters respectively.

6. A regulating method, comprising:

   disconnecting parallel connection between a target battery cluster and other battery clusters, and controlling connection between the target battery cluster and a first power converter to enable conduction; and
   sending a target current command to the first power converter, so as to regulate the target battery cluster according to the target current command through the first power converter.

7. The method according to claim 6, wherein before disconnecting the parallel connection between the target battery cluster and other battery clusters, the method further comprises:

   collecting state of charge of each of the battery clusters; and
   comparing the state of charge of each of the battery clusters with a target state of charge, and determining the battery cluster whose state of charge has a preset relationship with the target state of charge as the target battery cluster.

8. The method according to claim 6 or 7, further comprising:
   determining the battery cluster with the maximum absolute value of a difference between the state of charge and the target state of charge as the target battery cluster.

9. The method according to any one of claims 6-8, wherein before sending the target current command to the first power converter, the method further comprises:

   calculating a difference between the state of charge of the target battery cluster and the target state of charge, to obtain a difference of state of charge;
   obtaining a present current value of the target battery cluster;
   calculating a target regulated current value according to the difference of state of charge and the present current value; and
   generating the target current command according to the target regulated current value.

10. The method according to claim 9, wherein calculating the present current value of the target battery cluster comprises:

    obtaining a bus voltage, a voltage of the first power converter, a battery voltage of the target battery cluster, and an impedance of the target battery cluster;
    calculating differences between the bus voltage, the voltage of the first power converter, and the battery voltage of the target battery cluster, so as to obtain a present current voltage difference;
    calculating a quotient of the present current voltage difference and the impedance of the target battery cluster, so as to obtain the present current value of the target battery cluster.

11. The method according to any one of claims 6-8, wherein before sending the target current command to the first power converter, the method further comprises:

    calculating a difference between the state of charge of the target battery cluster and the target state of charge, to obtain a difference of state of charge;
    obtaining a present current value of the target battery cluster;
    acquiring a current working status of the battery system;
    determining a target regulated current value according to the current working status, the difference of state of charge, and the present current value of the target battery cluster; and
    generating the target current command according to the target regulated current value.

12. The method according to claim 11, wherein determining the target regulated current value according to the current working status, the difference of state of charge, and the present current value of the target battery cluster, comprises:

    determining a target regulating coefficient according to the current working status and the difference of state of charge; and

calculating a product of the target regulating coefficient and the present current value of the target battery cluster, to obtain the target regulated current value.

13. The method according to claim 12, wherein determining the target regulating coefficient according to the current working status and the difference of state of charge comprises:

determining, when the current working status of the battery system is charging and the difference of state of charge is greater than 0, the target regulating coefficient as a first preset coefficient;

determining, when the current working status of the battery system is charging and the difference of state of charge is smaller than 0, the target regulating coefficient as a second preset coefficient;

determining, when the current working status of the battery system is discharging and the difference of state of charge is greater than 0, the target regulating coefficient as a third preset coefficient;

determining, when the current working status of the battery system is discharging and the difference of state of charge is smaller than 0, the target regulating coefficient as a fourth preset coefficient,

wherein the first and fourth preset coefficients are less than 1, and the second and third preset coefficients are greater than 1.

14. The method according to any one of claims 6-8, wherein before disconnecting the parallel connection between the target battery cluster and other battery clusters, the method further comprises:

acquiring a battery voltage of each of the battery clusters before connecting the plurality of battery clusters in parallel;

determining the battery cluster whose battery voltage meets a preset parallel condition as a parallel-connectable battery cluster; and

controlling a plurality of parallel-connectable battery clusters to be connected in parallel.

15. The method according to claim 14, wherein determining the battery cluster whose battery voltage meets the preset parallel condition as the parallel-connectable battery cluster comprises:

determining all the battery clusters with differences between their battery voltages and a target battery voltage less than a first preset voltage threshold as the parallel-connectable battery clusters;

determining, from the battery clusters, a candidate parallel-connectable battery cluster with a difference between its battery voltage and the target battery voltage greater than the first preset voltage threshold and less than a second preset voltage threshold; and

controlling the first power converter to perform voltage compensation on the candidate parallel-connectable battery cluster, so that the candidate parallel-connectable battery cluster becomes a parallel-connectable battery cluster.

16. The method according to claim 15, wherein determining, from the battery clusters, the candidate parallel-connectable battery cluster with the difference between its battery voltage and the target battery voltage greater than the first preset voltage threshold and less than the second preset voltage threshold, comprises:

determining, if there are one battery cluster with the difference between its battery voltage and the target battery voltage greater than the first preset voltage threshold and less than the second preset voltage threshold, the battery cluster with the difference between its battery voltage and the target battery voltage greater than the first preset voltage threshold and less than the second preset voltage threshold as the candidate parallel-connectable battery cluster; and

determining, if there are a plurality of battery clusters with the differences between their battery voltages and the target battery voltage greater than the first preset voltage threshold and less than the second preset voltage threshold, the battery cluster with the smallest difference between its battery voltage and the target battery voltage as the candidate parallel-connectable battery cluster among the plurality of battery clusters with the differences between their battery voltages and the target battery voltage greater than the first preset voltage threshold and less than the second preset voltage threshold.

17. A regulating device, applicable to a regulating system connected to a battery system, wherein the battery system comprises a plurality of battery clusters, and the regulating device comprises:

a control module, configured to disconnect parallel connection between a target battery cluster and other battery clusters, and control connection between the target battery cluster and a first power converter to enable conduction; and
a sending module, configured to send a target current command to the first power converter, so as to regulate the target battery cluster according to the target current command through the first power converter.

18. Electronic equipment, comprising a memory and a processor, wherein the memory stores a computer program, and the processor, when executing the computer program, implements the method of any one of claims 6 to 16.

19. A computer-readable storage medium, having stored thereon a computer program which, when executed by a processor, causes the processor to implement the method of any one of claims 6 to 16.

Fig. 1

Fig. 2

Fig. 3

Fig. 4

Fig. 5

Fig. 6

Disconnect the parallel connection between target battery cluster and other battery clusters, and control the connection between the target battery cluster and the first power converter to conduct

S600

Send a target current command to the first power converter to regulate the target battery cluster according to the target current command through the first power converter

S610

```
┌─────────────────────────────────────────────────┐
│  Calculate the difference between the state of    │      ┌─ S700
│  charge of the target battery cluster and the     │──────┤
│  target state of charge, and obtain the           │      │
│  difference of the state of charge                │
└─────────────────────────────────────────────────┘
                        │
                        ▼
┌─────────────────────────────────────────────────┐
│           Calculate the present current           │      ┌─ S710
│           value of the target battery cluster     │──────┤
└─────────────────────────────────────────────────┘
                        │
                        ▼
┌─────────────────────────────────────────────────┐
│  Calculate the target regulated current value     │      ┌─ S720
│  according to the difference of the state of      │──────┤
│  charge and the present current value             │
└─────────────────────────────────────────────────┘
                        │
                        ▼
┌─────────────────────────────────────────────────┐
│         Generate a target current command         │      ┌─ S730
│         according to the target regulated         │──────┤
│         current value                             │
└─────────────────────────────────────────────────┘
```

Fig. 7

```
┌─────────────────────────────────────────────────┐
│  Obtain the bus voltage, the voltage of the       │      ┌─ S800
│  first power converter, the battery voltage of    │──────┤
│  the target battery cluster, and the impedance    │      │
│  of the target battery cluster                    │
└─────────────────────────────────────────────────┘
                        │
                        ▼
┌─────────────────────────────────────────────────┐
│  Calculate the difference between the bus         │      ┌─ S810
│  voltage, the voltage of the first power          │──────┤
│  converter and the battery voltage of the         │      │
│  target battery cluster, and obtain the current   │
│  voltage difference                               │
└─────────────────────────────────────────────────┘
                        │
                        ▼
┌─────────────────────────────────────────────────┐
│  Calculate the quotient of the current voltage    │      ┌─ S820
│  difference and the impedance of the target       │──────┤
│  battery cluster to obtain the present current    │      │
│  value of the target battery cluster              │
└─────────────────────────────────────────────────┘
```

Fig. 8

Calculate the difference between the state of charge of the target battery cluster and the target state of charge, and obtain the difference of the state of charge — S900

Obtain the current working status of the target battery cluster — S910

Obtain the current working status of the target battery cluster — S920

Determine the target regulated current value according to the current working state, the difference of the state of charge, and the present current value of the target battery cluster — S930

Generate the target current command according to the target regulated current value — S940

Fig. 9

Obtain the battery voltage of each battery cluster before multiple battery clusters are connected in parallel — S1000

Determine the battery cluster whose battery voltage meets the preset parallel connection condition as a parallel-connectable battery cluster — S1010

Control multiple parallel-connectable battery clusters to be connected in parallel — S1020

Fig. 10

Determine all battery clusters with a difference between the battery voltage and the target battery voltage less than the first preset voltage threshold as the parallel-connectable battery clusters ⟶ S1100

Determine a candidate parallel-connectable battery cluster from battery clusters with a difference between the battery voltage and the target battery voltage greater than the first preset voltage threshold and less than the second preset voltage threshold ⟶ S1110

Control the first power converter to perform voltage compensation on the candidate parallel-connectable battery cluster, so that the candidate parallelizable battery cluster becomes a parallel-connectable battery cluster ⟶ S1120

Fig. 11

1200 — Control module

1210 — Sending module

1220 — Collection module

1230 — Determination module

1240 — Calculation module

1250 — Generation module

1260 — Acquisition module

Fig. 12

Fig. 13

| INTERNATIONAL SEARCH REPORT | International application No. |
|---|---|
| | **PCT/CN2023/082327** |

| **A.** | **CLASSIFICATION OF SUBJECT MATTER** |
|---|---|

H02J7/00(2006.01)i

According to International Patent Classification (IPC) or to both national classification and IPC

| **B.** | **FIELDS SEARCHED** |
|---|---|

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 宁德时代, 吴凯, 陈新伟, 电池簇, 储能, 控制, 变换器, 差值, 并联, 调节, 备用, 备选, 预设系数, 绝对值, SOC, battery, clusters, DC/DC, DC/AC, converter, storage, condition+

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 115800414 A (NINGDE CONTEMPORARY AMPEREX TECHNOLOGY CO., LTD.) 14 March 2023 (2023-03-14) claims 1-19, description, paragraphs [0001]-[0154], and figures 1-13 | 1-19 |
| X | CN 215870854 U (SUNGROW-SAMSUNG SDI ENERGY STORAGE POWER SUPPLY CO., LTD.) 18 February 2022 (2022-02-18) description, paragraphs [0004]-[0066], and figures 1 and 2b | 1-14, 17-19 |
| A | CN 215870854 U (SUNGROW-SAMSUNG SDI ENERGY STORAGE POWER SUPPLY CO., LTD.) 18 February 2022 (2022-02-18) description, paragraphs [0004]-[0066], and figures 1 and 2b | 15, 16 |
| A | CN 113437780 A (SUNGROW POWER SUPPLY CO., LTD.) 24 September 2021 (2021-09-24) entire document | 1-19 |
| A | CN 114362288 A (SHENZHEN CLOU ELECTRONICS CO., LTD.) 15 April 2022 (2022-04-15) entire document | 1-19 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 April 2023** | **08 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2023/082327**

| Patent document cited in search report | | | Publication date (day/month/year) | Patent family member(s) | Publication date (day/month/year) |
|---|---|---|---|---|---|
| CN | 115800414 | A | 14 March 2023 | None | |
| CN | 215870854 | U | 18 February 2022 | None | |
| CN | 113437780 | A | 24 September 2021 | None | |
| CN | 114362288 | A | 15 April 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210654627